# EUROPÄISCHE PATENTSCHRIFT

(11) **EP 1 827 754 B1**
(45) Veröffentlichungstag und Bekanntmachung des Hinweises auf die Patenterteilung: **11.03.2009**
(21) Anmeldenummer: 05779604.7
(22) Anmeldetag: 31.08.2005
(51) Int. Cl.: B23P 21/00, B23P 19/00, B65G 37/02, B23Q 7/14

(54) **MONTAGEZELLE ZUR MONTAGE VON BAUGRUPPEN AUS WERKSTÜCKEN AUF PALETTEN UND VERFAHREN ZU DEREN BETRIEB**
WORK CELL FOR ASSEMBLING UNITS OF WORKPIECES ON PALLETS AND METHOD FOR OPERATING THE SAME
CELLULE SERVANT AU MONTAGE D' ENSEMBLES DE PIÈCES SUR DES PALETTES ET PROCÉDÉ POUR FAIRE FONCTIONNER LADITE CELLULE

(30) Priorität: 14.12.2004 DE 102004062377
(43) Veröffentlichungstag der Anmeldung: 05.09.2007
(73) Patentinhaber: FELSOMAT GmbH & Co. KG, 75203 Königsbach-Stein (DE)
(72) Erfinder: JÄGER, Helmut, 75203 Königsbach-Stein (DE)
(74) Vertreter: Kohler Schmid Möbus
(86) Internationale Anmeldenummer: PCT/DE2005/001520
(87) Internationale Veröffentlichungsnummer: WO 2006/063541

(56) Entgegenhaltungen:
- EP-A- 0 210 572
- DE-A1- 4 221 366
- DE-A1- 19 504 457
- US-A- 5 680 694
- US-A- 5 737 827
- US-A1- 2002 108 836
- US-B1- 6 654 663
- PATENT ABSTRACTS OF JAPAN Bd. 2003, Nr. 12, 5. Dezember 2003 (2003-12-05) -& JP 2004 291117 A (MAZDA MOTOR CORP), 21. Oktober 2004 (2004-10-21)
- PATENT ABSTRACTS OF JAPAN Bd. 017, Nr. 449 (M-1465), 18. August 1993 (1993-08-18) -& JP 05 104460 A (MITSUBISHI ELECTRIC CORP), 27. April 1993 (1993-04-27)
- PATENT ABSTRACTS OF JAPAN Bd. 016, Nr. 153 (M-1235), 15. April 1992 (1992-04-15) -& JP 04 008435 A (MITSUBISHI ELECTRIC CORP), 13. Januar 1992 (1992-01-13)
- PATENT ABSTRACTS OF JAPAN Bd. 2000, Nr. 17, 5. Juni 2001 (2001-06-05) -& JP 01 071677 A (MITSUBISHI ELECTRIC CORP), 16. März 1989 (1989-03-16)

## Beschreibung

Die Erfindung betrifft eine Montagezelle geeignet zur Montage von Baugruppen aus Werkstücken auf Paletten, gemäss dem Oberbegriff des Anspruchs 1. Eine solche Montagezelle ist in US-A-5,737,827 offenbart. Die Erfindung betrifft weiter ein Verfahren zum Betrieb einer Montagezelle, die nach einem der Ansprüche 1 bis 19 ausgebildet ist.

Zur Montage von Baugruppen aus Werkstücken, beispielsweise Getrieben aus Wellen, Lagern, Zahnrädern, Dichtungsringen etc., werden Werkstücke in einer bestimmten Arbeitsabfolge der Baugruppe zugeführt und montiert. Dabei wechseln sich typischerweise manuelle Montagearbeiten (durchgeführt von Werkern) und automatische Montagearbeiten (durchgeführt von Maschinen) ab.

Im Stand der Technik werden für die Montage von Baugruppen Montagelinien eingesetzt. Eine solche Montagelinie umfasst ein Transportband, z. B. einen Friktionsrollenförderer oder Gurtförderer, auf dem Paletten transportiert werden. Auf den Paletten befinden sich die Baugruppen. Entlang des Transportbands sind Montagestationen angeordnet. Das Transportband besitzt eine feste Transportrichtung, so dass die Paletten die Montagestationen in einer festen Reihenfolge durchlaufen. Transportbandabschnitte zwischen den einzelnen Montagestationen dienen als lokale Puffer. Diese lokalen Puffer haben aufgrund ihres Flächenbedarfs eine nur geringe Kapazität.

Bei diesen Montagelinien entstehen an den meisten Montagestationen lange Nebenzeiten, in denen keine Montagearbeiten erfolgen. Nur diejenige Montagestation, die den zeitlich längsten Montagearbeitsablauf hat, ist voll ausgelastet. Diese bildet den "Flaschenhals" der Montagelinie. Weiterhin sind die Montagelinien relativ unflexibel. Eine Montagelinie ist durch die räumliche Reihenfolge der Montagestationen für eine bestimmte Arbeitsabfolge einer einzigen Baugruppe eingerichtet. Ein Wechsel der Baugruppe erfordert einen Umbau der Montagelinie oder sogar eine Umgruppierung der Montagestationen.

Aus der DE 195 04 457 A1 ist eine modulare Fließfertigungsanlage bekannt. Ein umlaufendes Transportband mit fester Förderrichtung transportiert Paletten.

Um das Transportband herum sind Montagestationen angeordnet, wobei jede Montagestation über eine eigene Aus- und Einschleusstrecke verfügt, mit der eine einzelne Palette vom umlaufenden Transportband zur jeweiligen Montagestation gebracht werden kann und umgekehrt. In der modularen Fließfertigungsanlage kann die räumliche Reihenfolge der Montagestationen unabhängig von der Arbeitsabfolge der Baugruppe der Paletten gewählt werden.

Nachteilig an der bezeichneten modularen Fließfertigungsanlage ist es aber, dass der Transport einer Palette von Montagestation zu Montagestation über das umlaufende Transportband sehr zeitaufwändig ist. Nachteilig ist weiterhin die sehr große Zahl von Paletten, die auf dem Transportband umlaufen und im Betrieb dieser Fließfertigungsanlage notwendig sind.

### Aufgabe der Erfindung

Es ist daher Aufgabe der Erfindung, eine Montagezelle bereitzustellen, mit der Baugruppen unabhängig von der räumlichen Anordnung der Montagestationen montiert werden können, die mit wenigen Paletten auskommt und bei der ein schnellerer Transport der Paletten von Montagestation zu Montagestation möglich ist.

### Beschreibung der Erfindung

Diese Aufgabe wird durch eine Montagezelle gemäss Anspruch 1 gelöst.

Vorteil hafte Ausgestaltungen der Montagezelle sind in den Unteransprüchen wiedergegeben.
Die erfindungsgemäße Montagezelle umfasst eine Vielzahl von Palettenplätzen. Palettenplätze sind Orte innerhalb der Montagezelle, an denen Paletten im normalen Betrieb der Montagezelle positioniert werden, und zwar nicht nur während eines Transports einer Palette. Palettenplätze sind beispielsweise ausgebildet als manuelle Montagestationen, automatische Montagestationen, halbautomatische Montagestationen, Pufferplätze, usw. Eine Palette bezeichnet jede Art von Träger für Werkstücke bzw. Baugruppen, insbesondere versehen mit beweglichen Teilen als Montagehilfen für die zu montierenden Werkstücke bzw. Baugruppen. Die Paletten können ihren Palettenplatz mit Hilfe des Drei-Achs-Moduls wechseln. Das Drei-Achs-Modul verfährt dazu zum Ausgangs-Palettenplatz einer Palette, nimmt die Palette auf, verfährt zum Ziel-Palettenplatz und legt die Palette ab.

Im Gegensatz zum umlaufenden Transportband im Stand der Technik kann das Drei-Achs-Modul eine Palette direkt von jedem Palettenplatz zu einem beliebigen anderen Palettenplatz transportieren. Der Transport erfolgt im Sinne der Erfindung direkt, wenn die Transportvorrichtung, d.h. das Drei-Achs-Modul, während des Transports den räumlichen Abstand zum Zielort zunehmend verkürzt. Ein Transport wäre im Sinne der Erfindung nicht direkt, wenn während des Transports zwischen Ausgangspalettenplatz und Zielpalettenplatz die Palette zwischendurch auf einen weiteren Palettenplatz (etwa eine Montagestation) gelangen würde.

Der Transport mit dem Drei-Achs-Modul ist dadurch besonders schnell. Für besonders hohe Transportgeschwindigkeiten kann das Drei-Achs-Modul mit Linearmotoren ausgestattet sein, insbesondere für das Verfahren des Drei-Achs-Moduls hin und her entlang einer Hauptförderrichtung.
Erfindungsgemäß können Transportzeiten zwischen zwei Palettenplätzen (etwa Montagestationen) von 1 Sekunde und weniger erreicht werden, wohingegen Montagezeiten an manuellen Montagestationen typischerweise 20-60 Sekunden betragen, und Montagezeiten an automatischen Montagestationen typischerweise um 5-10 Sekunden. Durch Transport wird in der erfindungsgemäßen Montagezelle nur eine Palette gebunden, die sich gerade im Drei-Achs-Modul befindet.

Andererseits erlaubt das Drei-Achs-Modul eine gute Kontrolle der Beschleunigung der Paletten beim Transport; insbesondere wird die Beschleunigung nicht durch Reibungsvorgänge auf einem Transportband bestimmt. Dadurch werden Stöße auf die Paletten und deren Baugruppen vermieden, und eine Kippgefahr wird beseitigt.

Typischerweise parallel zu einer Hauptförderrichtung des Transportmoduls aneinandergereiht sind die Palettenplätze, insbesondere die Montagestationen. Die Hauptförderrichtung verläuft typischerweise horizontal und gerade (X-Richtung), sie kann aber auch steigend, fallend, und/oder bogenförmig ausgebildet sein oder bogenförmige Abschnitte aufweisen. Das Drei-Achs-Modul ist darüber hinaus in zwei weitere Richtungen, typischerweise vertikal (Z-Richtung) und horizontal quer zur Hauptförderrichtung (Y-Richtung) verfahrbar. Durch die Verfahrbarkeit in Y-Richtung wird der Zugriff auf Palettenplätze möglich, die parallel zur Hauptförderrichtung aufgereiht sind. Grundsätzlich kann eine Bewegung des Drei-Achs-Moduls in jede der Achsrichtungen (X, Y, Z) unabhängig von der Lage oder der Bewegung der übrigen Achsrichtungen erfolgen. Das Drei-Achs-Modul hat vorteilhafter Weise eine NC- oder CNC-Steuerung (CNC: computerized numerical control; NC: numerical control).

Durch das Drei-Achs-Modul ist es möglich, mit einer Palette die Palettenplätze und insbesondere die Montagestationen in beliebiger Reihenfolge anzusteuern. Die Montagezelle ist somit für jede Reihenfolge von Montagestationen in der Arbeitsabfolge einer Baugruppe einer Palette geeignet, ohne dass es eines Umbaus bedürfte. Die Arbeitsabfolge einer Palette kann allein über Software eingerichtet und gesteuert werden.

Insbesondere ist es dann möglich, verschiedene Arten von Paletten mit jeweils unterschiedlichen Baugruppen und damit unterschiedlichen Arbeitsabfolgen mit der gleichen Montagezelle zu handhaben, entweder ohne Umbau nacheinander oder auch gleichzeitig.

Weiterhin ist es mit der erfindungsgemäßen Montagezelle ohne weiteres möglich, in der Arbeitsabfolge einer Baugruppe auf einer Palette vorzusehen, dieselbe Montagestation mehrfach anzufahren und dort jeweils unterschiedliche Montagearbeitsabläufe durchzuführen. Dadurch kann die Auslastung dieser Montagestation erhöht werden. Dies ist besonders vorteilhaft bei Montagestationen mit im Vergleich zu den übrigen Montagestationen kurzen Montagezeiten, insbesondere bei automatischen Montagestationen wie Fügeeinrichtungen oder Pressen. Es ist vorteilhaft, Palettenplätze (insbesondere Montagestationen und Pufferplätze), die in einer Arbeitabfolge mehrfach angefahren werden, an einem zentralen Platz in der Montagezelle anzuordnen, um einen möglichst kurzen und schnellen Zugang zu gewährleisten.

Im Rahmen der Erfindung übernimmt vorteilhafter Weise eine Computersteuerung die Festlegung der Reihenfolge von Transportvorgängen des Drei-Achs-Moduls in der Montagezelle. Dabei können an sich bekannte prioritätsgesteuerte Algorithmen angewandt werden. Die Software der Computersteuerung kann insbesondere das Konzept der "Agenten-orientierten Intelligenz" nutzen. Prioritäten der Algorithmen können beispielsweise sein eine hohe Auslastung bestimmter Montagestationen oder ein hoher Durchsatz bestimmter Arten von Paletten. Der Montagefortschritt an einzelnen Montagezellen kann vollautomatisch überwacht werden.

Eine besonders bevorzugte Ausführungsform der erfindungsgemäßen Montagezelle sieht vor, dass zumindest ein Teil der Palettenplätze als Pufferplätze ausgebildet ist, an denen keinerlei Montagearbeiten an den Baugruppen vorgenommen werden können. Durch die Einrichtung von Pufferplätzen kann die Auslastung der Montagestationen erhöht werden, und die Festlegung der Transportreihenfolge des Drei-Achs-Moduls wird weniger komplex. Weiterhin bieten Pufferplätze die Möglichkeit, bei Ausfall einzelner Montagestationen an den übrigen Montagestationen den Montagebetrieb eine Zeit lang aufrecht zu erhalten. In einer Montagezelle eingerichtete Pufferplätze können grundsätzlich von allen Montagestationen genutzt werden.

Bei einer bevorzugten Weiterbildung dieser Ausführungsform sind mehrere Pufferplätze vertikal übereinander angeordnet, insbesondere wobei mindestens drei Pufferplätze vertikal übereinander angeordnet sind. Durch die vertikale Anordnung wird die Montagezelle insgesamt kompakter. In vielen Anwendungsfällen genügt es, zwei Pufferplätze vertikal übereinander anzuordnen.

Bei einer besonders bevorzugten Ausführungsform der erfindungsgemäßen Montagezelle umfasst die Montagezelle mindestens eine manuelle Montagestation für die Durchführung von Montagearbeiten durch einen Werker, wobei die manuelle Montagestation höhenverstellbar ausgebildet ist. Durch die Höhenverstellbarkeit kann die manuelle Montagestation an die Körpergröße des Werkers angepasst werden. Dies beugt Erkrankungen beim Werker vor und erhöht dessen Arbeitssicherheit. Im Allgemeinen ist es ausreichend, die Ablagefläche für die Palette höhenverstellbar einzurichten. Das Drei-Achs-Modul ist (anders als Transportband-Anlagen des Standes der Technik) auch in der Höhe verfahrbar, so dass es ohne weiteres möglich ist, eine Palette auf einer beliebigen Höhe abzulegen.

Erfindungsgemäss ist vorgesehen, dass die Montagezelle mindestens eine manuelle Doppelmontagestation aufweist, wobei jede manuelle Doppelmontagestation zwei manuelle Montagestationen umfasst, an denen ein Werker im Wechsel Montagearbeiten durchführen kann. Während der Werker an der ersten manuellen Montagestation tätig ist, kann an der zweiten manuellen Montagestation eine bereits abgearbeitete Palette durch eine noch abzuarbeitende Palette ersetzt werden. Sobald der Werker mit der Palette der ersten manuellen Montagestation fertig ist, kann er sofort an der Palette der zweiten manuellen Montagestation weiter montieren und so fort. Dadurch entfällt eine Palettenwechselzeit als Nebenzeit. Der Werker kann eine höhere Auslastung erreichen. Erfindungsgemäß können an beiden manuellen Montagestationen identische Montagearbeitsabläufe, unterschiedliche Montagearbeitsabläufe oder auch wechselnde Montagearbeitsabläufe eingerichtet sein.

Besonders vorteilhaft ist weiterhin eine Ausführungsform einer erfindungsgemäßen Montagezelle, die vorsieht, dass die Montagezelle wenigstens eine manuelle Montagestation aufweist, die einen verfahrbaren Schutzschild, insbesondere einen Sicherheitsrolladen, aufweist, der zwischen zwei Positionen verfahrbar ist, dass in der ersten Position des Schutzschildes ein Zugang für einen Werker zu dem Palettenplatz der manuellen Montagestation vollständig versperrt ist, aber ein Zugang für die Transportvorrichtung zu dem Palettenplatz der manuellen Montagestation frei ist, und dass in der zweiten Position des Schutzschildes der Zugang für einen Werker zu dem Palettenplatz der manuellen Montagestation zur Durchführung von Montagearbeiten frei ist, aber der Zugang für die Transportvorrichtung zu dem Palettenplatz der manuellen Montagestation vollständig versperrt ist. Der Schutzschild ist ausreichend robust, so dass er von der Transportvorrichtung im Falle einer Fehlsteuerung nicht durchschlagen werden kann. Der Schutzschild gewährleistet ein Höchstmaß an Arbeitssicherheit für einen Werker an der manuellen Montagestation. Dadurch, dass der Schutzschild den Werker sowohl in der ersten als auch der zweiten Position von der Transportvorrichtung trennt, kann es nicht dazu kommen, dass der Werker in die beweglichen Teile der Transportvorrichtung greifen kann. Bevorzugt ist es weiterhin, wenn in jeder Stellung des Schutzschildes zwischen der ersten und zweiten Position wenigstens einer der beiden Zugänge vollständig versperrt ist. Dies kann beispielsweise leicht durch einen in der ersten bzw. zweiten Position ausreichend über die Öffnungen der Zugänge zum Palettenplatz der manuellen Montagestation hinausragenden Sicherheitsrolladen erreicht werden. Dann ist die Sicherheit für den Werker noch weiter erhöht. Bei manuellen Doppelmontagestationen können an jeder manuellen Montagestation separate Schutzschilde wie oben beschreiben vorgesehen sein.

Bei einer Weiterbildung dieser Ausführungsform schließt der Schutzschild in der ersten Position den Palettenplatz der manuellen Montagestation lichtdicht ab. Dadurch ist es möglich, an einer Palette bzw. deren Baugruppe optische Messungen unter definierten Lichtverhältnissen vorzunehmen, etwa zur Qualitätskontrolle. Die manuelle Montagestation kann dafür mit geeigneten Kameras und/oder geeigneten künstlichen Lichtquellen versehen sein.

Besonders bevorzugt ist weiterhin eine Ausführungsform, bei der die Montagezelle mindestens eine automatische Montagestation aufweist, die eine Wechselvorrichtung zum automatischen Wechsel zwischen mehreren Montagewerkzeugen aufweist. Eine solche Montagestation kann verschiedenartige Montagearbeitsabläufe durchführen; insbesondere kann das Montagewerkzeug je nach ankommender Palette ausgewählt werden. Die automatische Montagestation kann in der Arbeitsabfolge einer Baugruppe einer Palette mehrfach eingesetzt werden, oder auch bei verschiedenen Arten von Paletten mit unterschiedlichen Baugruppen eingesetzt werden. Insgesamt kann dadurch die Auslastung der automatischen Montagestation erheblich vergrößert werden.

Bevorzugt ist weiterhin eine Ausführungsform, die dadurch gekennzeichnet ist, dass die Montagezelle mindestens eine automatische Montagestation aufweist, und dass die automatische Montagestation eine eigene, erste Verfahrvorrichtung aufweist, die eine Palette relativ zu einem in der Montagezelle ortsfesten Werkzeug der automatischen Montagestation verfahren kann, so dass unterschiedliche Orte auf der Palette für das Werkzeug zugänglich werden. Wenn in einem Montagearbeitsablauf ein Werkzeug mehrfach bei einer Palette an unterschiedlichen Orten eingesetzt werden soll, braucht nicht das in der Regel schwere Werkzeug samt dessen Träger verfahren werden. Mit dieser Ausführungsform können besonders gut Paletten gehandhabt werden, auf denen mehrere gleiche Baugruppen angeordnet sind.

Vorteilhaft ist weiterhin eine Ausführungsform, bei der vorgesehen ist, dass die Montagezelle mindestens eine automatische Montagestation aufweist, dass die automatische Montagestation wenigstens zwei Palettenplätze und einen Montageplatz für die Durchführung von Montagearbeiten auf einer Palette umfasst, insbesondere wobei der Montageplatz einen weiteren, für die Transportvorrichtung zugänglichen Palettenplatz darstellt, und dass die automatische Montagestation eine eigene, zweite Verfahrvorrichtung aufweist, mit der eine einzelne Palette zwischen dem Montageplatz und jedem Palettenplatz der automatischen Montagevorrichtung verfahren werden kann und umgekehrt. Die zweite Verfahrvorrichtung ist dann typischerweise zweiteilig ausgebildet, wobei die beiden Teile jeweils für das Verfahren zu bzw. von einem der Palettenplätze zum Montageplatz ausgebildet sind. Mit dieser Ausführungsform wird die automatische Montagestation von der Transportvorrichtung weitgehend entkoppelt. Die Palettenwechselzeit der automatischen Montagestation wird erheblich verkürzt, indem eine abgearbeitete Palette sofort vom Montageplatz entfernt und durch eine lokal vorgehaltene, noch abzuarbeitende Palette ersetzt wird. Dadurch kann die Auslastung der automatischen Montagestation erheblich gesteigert werden.

Ebenso vorteilhaft ist eine Ausführungsform, die dadurch gekennzeichnet ist, dass die Montagezelle mindestens eine automatische Montagestation aufweist, dass die automatische Montagestation einen ersten und einen zweiten Palettenplatz umfasst, die beide auf einem gemeinsamen Schlitten angeordnet sind, wobei der Schlitten mittels einer dritten Verfahrvorrichtung zwischen zwei Positionen verfahrbar ist, dass in der ersten Position des Schlittens der erste Palettenplatz für die Transportvorrichtung zugänglich ist und eine Palette des zweiten Palettenplatzes für Montagearbeiten der automatischen Montagestation zugänglich ist, und dass in der zweiten Position des Schlittens der zweite Palettenplatz für die Transportvorrichtung zugänglich ist und eine Palette des ersten Palettenplatzes für Montagearbeiten der automatischen Montagestation zugänglich ist. Auch mit dieser Ausführungsform wird die automatische Montagestation von der Transportvorrichtung weitgehend entkoppelt. Die Palettenwechselzeit der automatischen Montagestation wird erheblich verkürzt, indem eine abgearbeitete Palette auf dem ersten Palettenplatz durch Verschieben des Schlittens sofort durch eine lokal vorgehaltene, noch abzuarbeitende Palette auf dem zweiten Palettenplatz ersetzt wird oder umgekehrt. Dadurch kann die Auslastung der automatischen Montagestation erheblich gesteigert werden. Gegenüber der vorherigen Ausführungsform hat diese Ausführungsform den Vorteil eines einfacheren Aufbaus mit weniger Bewegungsachsen.

Bei einer bevorzugten Weiterbildung der vorgenannten vier Ausführungsformen einer erfindungsgemäßen Montagezelle ist die automatische Montagestation als Fügeeinrichtung ausgebildet. Füge- und Pressprozesse sind bei Montagearbeiten besonders häufig, so dass damit die Effektivität der Montagezelle insgesamt verbessert werden kann.

Vorteilhaft ist weiterhin eine Ausführungsform einer erfindungsgemäßen Montagezelle, bei der vorgesehen ist, dass die Montagezelle ein zentrales Werkstücklager mit mindestens einem Palettenplatz und einem Werkstückverteiler aufweist, wobei der Werkstückverteiler so ausgebildet ist, dass er Werkstücke aus dem zentralen Werkstücklager zu einer Palette auf dem mindestens einen Palettenplatz des Werkstücklagers transportieren kann. Bei dieser Ausführungsform können Werkstücke, insbesondere größere oder schwerere Werkstücke, die an einer manuellen Montagestation auf eine Baugruppe einer Palette aufgesetzt werden sollen, vom zentralen Werkstücklager automatisch bereitgestellt und auf dieser Palette zunächst zwischengelagert werden. Die Palette wird dann zur manuellen Montagestation transportiert, und die zwischengelagerten Werkstücke werden dort vom Werker auf die Baugruppe aufgesetzt. Bevorzugt werden im zentralen Werkstücklager Werkstücke bevorratet, die an verschiedenen manuellen Montagestationen montiert werden. Durch das zentrale Werkstücklager entfällt die Notwendigkeit einer lokalen Werkstückbevorratung an den manuellen Montagestationen (beispielsweise mit lokalen Stapelboxen), bzw. diese kann auf Kleinteile beschränkt werden.

Bei einer vorteilhaften Ausführungsform weist die Transportvorrichtung eine Dreheinrichtung zum Rotieren einer Palette um eine vertikale Achse auf. Dadurch kann eine Palette vor Übergabe an einen Palettenplatz oder nach Erhalt von einem Palettenplatz, insbesondere einer Montagestation, in eine gewünschte Drehstellung orientiert werden. Dies ist beispielsweise dann vorteilhaft, wenn mehrere Montagezellen zu einem Montagesystem miteinander verknüpft sind und die jeweiligen Hauptförderrichtungen in den Montagezellen nicht parallel verlaufen.

Besonders bevorzugt ist eine Ausführungsform der erfindungsgemäßen Montagezelle, bei der vorgesehen ist, dass die Transportvorrichtung auf einer horizontalen Führung in einer X-Richtung vorwärts und rückwärts verfahrbar ist, und dass die Palettenplätze auf einer Seite der Führung oder beiderseits der Führung angeordnet sind. Die Beschickung der Palettenplätze erfolgt dann bequem quer zur Hauptförderrichtung (X-Richtung). Weiterhin ist die Montagezelle leicht erweiterbar, indem in X-Richtung weitere Palettenplätze, insbesondere Montagezellen, samt weiteren Abschnitten der Führung angebaut werden.

Bei einer besonders bevorzugten Weiterbildung dieser Ausführungsform ist die Transportvorrichtung mit einem Linearmotor entlang der Führung verfahrbar. Ein Linearmotor gestattet ein besonders schnelles und präzises Verfahren des Drei-Achs-Moduls in der Hauptförderrichtung (X-Richtung). Auch die übrigen beiden Verfahrrichtungen (Y, Z), die senkrecht zur X-Richtung und senkrecht zueinander orientiert sind, können mittels Linearmotoren realisiert werden.

Ganz besonders bevorzugt ist eine Weiterbildung der obigen Ausführungsform, die dadurch gekennzeichnet ist, dass mehrere identische Basisplattformen vorgesehen sind, die in X-Richtung hintereinander angeordnet und reversibel aneinander befestigt sind, und dass die Basisplattformen standardisierte Aufnahmen aufweisen, wobei zumindest in einem Teil der Aufnahmen Montagestationen und/oder Pufferplätze und/oder Abschnitte der Führung der Transportvorrichtung und/oder zentrale Werkstücklager und/oder andere Einrichtungen der Montagezelle mit entsprechenden Fußteilen reversibel befestigt sind, insbesondere festgeschraubt sind. Durch die Basisplattformen wird ein modularer Aufbau der Montagezelle realisiert, der Erweiterungen besonders einfach macht. Die auf einer Basisplattform angeordneten Einrichtungen sind bevorzugt als Stand-Alone-Module mit eigener Steuerung realisiert; Datenleitungen, Energieleitungen und ggf. weitere Versorgungszuleitungen wie Druckluft sind über Steckverbindungen andockbar. Bei dieser Weiterbildung kann die Montagezelle leicht umgerüstet werden, wenn sich die zu montierenden Baugruppen ändern, d.h. es ist ein kostengünstiges "Recycling" der Montagezelle bei einer Umstellung der Produktion möglich. Dadurch können Investitionskosten vermindert werden.

In den Rahmen der vorliegenden Erfindung fällt auch ein Montagesystem umfassend wenigstens zwei Montagezellen nach einem der vorhergehenden Ansprüche, das dadurch gekennzeichnet ist, dass die Montagezellen jeweils Palettenplätze aufweisen, die als Pufferplätze ausgebildet sind, und dass zumindest ein Teil der Pufferplätze jeder Montagezelle zwei Montagezellen gleichzeitig zugeordnet ist und somit für die Transportvorrichtungen dieser beiden Montagezellen zugänglich ist (=Übergabeplätze). Ein solches Montagesystem bietet die Möglichkeit, mehrere Montagezellen auf einfache Weise miteinander zu verknüpfen. Ein Montagesystem kann räumlich an die örtlichen Gegebenheiten gut angepasst werden und bietet gute Erweiterungsmöglichkeiten. Insbesondere sind auch T-förmig aufeinanderstoßende Hauptförderrichtungen von beteiligten Montagezellen möglich.

Bevorzugt ist eine Ausführungsform dieses Montagesystems umfassend wenigstens zwei Montagezellen, wobei die Führungen zweier benachbarter Montagezellen parallel verlaufen, und dass Pufferplätze, die diesen beiden Montagezellen gleichzeitig zugeordnet sind, zwischen diesen Führungen vorgesehen sind. Dieser Aufbau ist besonders kompakt.

Eine Verkettung von Montagezellen in Übereinstimmung mit der Erfindung kann auch dadurch erfolgen, dass zwei (oder mehr) Montagezellen benachbart angeordnet werden, und dass mindestens eine Umsetzvorrichtung vorgesehen ist, mit der Baugruppen oder Paletten von der einen Montagezelle in die andere Montagezelle verbracht werden können.

Weiterhin in den Rahmen der vorliegenden Erfindung fällt ein Verfahren zum Betrieb der Montagezelle, die nach einem der Ansprüche 1 bis 19 ausgebildet ist, das dadurch gekennzeichnet ist, dass an mindestens einer Montagestation alternative Montagearbeitsabläufe durchführbar sind, und dass abhängig von der in der Montagestation befindlichen Palette einer der alternativen Montagearbeitsabläufe ausgewählt und durchgeführt wird. Dadurch kann eine bessere Auslastung an dieser Montagestation erreicht werden. Im Stand der Technik wird eine Montagestation für genau einen Montagearbeitsablauf in der Arbeitsabfolge genau einer Art von Palette bzw. deren Baugruppe eingesetzt. Immer dann, wenn die Zeitdauer dieses Montagearbeitsablaufs (d.h. die Montagezeit) an dieser Montagestation kürzer ist als die Montagezeit an auch nur einer der übrigen Montagestationen in der Arbeitsabfolge dieser Palette, kommt es zu einer Nebenzeit (d.h. Stillstandszeit) an dieser Montagestation. Gemäß dem erfindungsgemäßen Verfahren wird die Nebenzeit für alternative Montagearbeitsabläufe genutzt. Außerdem wird an manuellen Montagestationen die Arbeit für einen Werker durch alternative Montagearbeitsabläufe abwechslungsreicher und damit angenehmer und weniger ermüdend.

Eine vorteilhafte Variante des erfindungsgemäßen Verfahrens sieht vor, dass in der Arbeitsabfolge einer Baugruppe einer Palette dieselbe Palette mehrfach zur selben Montagestation transportiert wird und die Baugruppe der Palette dann jeweils unterschiedliche Montagearbeitsabläufe an dieser Montagestation durchläuft. Dies ist eine Möglichkeit um die Auslastung dieser Montagestation zu erhöhten. Bevorzugt entspricht die Summe der Montagezeiten an dieser Montagestation maximal der längsten Montagezeit, die an einer der übrigen Montagestationen in der Arbeitsabfolge dieser Palette auftritt.

Bei einer anderen Variante des erfindungsgemäßen Verfahrens werden in der Montagezelle gleichzeitig verschiedene Arten von Paletten mit jeweils unterschiedlichen Baugruppen abgearbeitet werden. Dabei fallen typischerweise zumindest an einem Teil der Montagestationen alternative Montagearbeitsabläufe bei den verschiedenen Arten von Paletten an. Dadurch besteht ebenfalls die Möglichkeit, die Auslastung an diesem Teil der Montagestationen zu erhöhen.

Eine Weiterentwicklung dieser Verfahrensvariante ist dadurch gekennzeichnet, dass die Montagezelle N manuelle Montagestationen aufweist, wobei N größer oder gleich 2 ist, dass in der Montagezelle wenigstens M Arten von Paletten mit jeweils unterschiedlichen Baugruppen abgearbeitet werden, dass M größer oder gleich N ist, und dass für jede manuelle Montagestation wenigstens eine Art von Palette vorgesehen ist, in deren Arbeitsabfolge diese manuelle Montagestation vor jeder anderen manuelle Montagestation an der Reihe ist. Dadurch ist gewährleistet, dass auch bei einem Ausfall einer manuellen Montagestation (etwa wenn der dortige Werker pausiert) an allen übrigen manuellen Montagestationen weitergearbeitet werden kann, ohne dass vor dem Ausfall ein Puffer hätte angelegt werden müssen. Die an den übrigen manuellen Montagestationen abgearbeiteten Paletten werden gegebenenfalls an Pufferplätze gebracht.

Für das obige erfindungsgemäße Verfahren und dessen Varianten stellt eine gegebenenfalls beteiligte manuelle Doppelmontagestation im Sinne der Erfindung funktionell lediglich eine einzige (manuelle) Montagestation dar.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Zeichnung

Die Erfindung ist in der Zeichnung dargestellt und wird anhand von Ausführungsbeispielen näher erläutert. Es zeigt:
- Fig. 1: eine schematische Aufsicht auf eine erfindungsgemäße Montagezelle;
- Fig. 2: eine schematische Aufsicht auf ein erfindungsgemäßes Montagesystem umfassend zwei Montagezellen;
- Fig. 3a: eine schematische Seitenansicht einer manuellen Montagestation einer erfindungsgemäßen Montagezelle mit einem Sicherheitsrolladen in einer ersten, zum Palettenwechsel geeigneten Position;
- Fig. 3b: eine schematische Seitenansicht der manuellen Montagestation von Fig. 3a mit dem Sicherheitsrolladen in einer zweiten, zur Montage durch den Werker geeigneten Position;
- Fig. 4: eine schematische Schrägansicht einer manuellen Doppelmontagestation einer erfindungsgemäßen Montagezelle mit Drei-Achs-Modul;
- Fig. 5: eine schematische Seitenansicht eines Drei-Achs-Moduls einer erfindungsgemäßen Montagezelle;
- Fig. 6: eine schematische Schrägansicht einer Fügeeinrichtung mit Werkzeugwechselvorrichtung und verfahrbarem, gemeinsamen Schlitten für zwei Palettenplätze, für eine erfindungsgemäße Montagezelle.

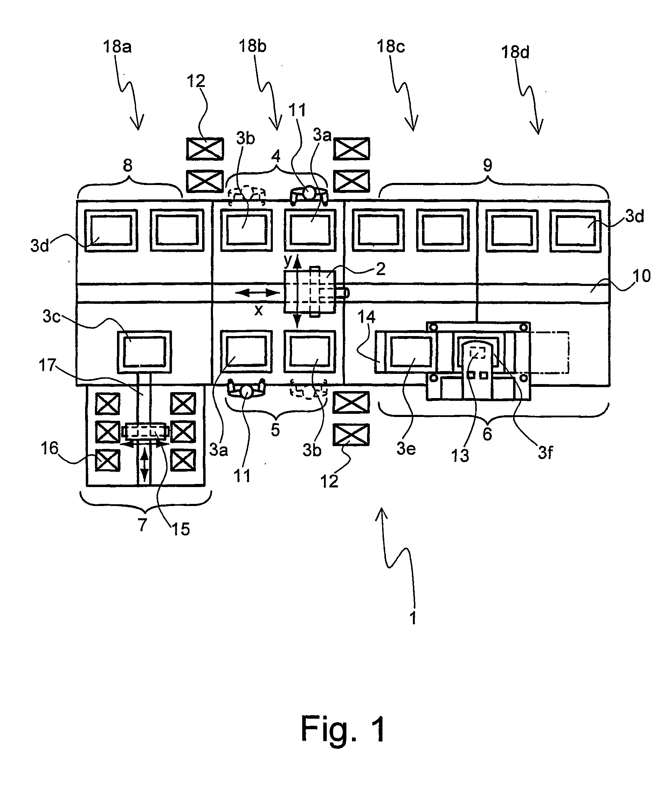

In **Fig. 1** ist eine erfindungsgemäße Montagezelle 1 in schematischer Aufsicht dargestellt. Die Montagezelle 1 umfasst ein Drei-Achs-Modul 2 zum Transport von Paletten zwischen Palettenplätzen 3a, 3b, 3c, 3d, 3e, 3f von verschiedenen Einrichtungen der Montagezelle 1. Die Palettenplätze 3a-3f sind diejenigen Orte in der Montagezelle 1, an denen sich Paletten befinden können und die für das Drei-Achs-Modul 2 zugänglich sind. Das Drei-Achs-Modul 2 kann dabei erfindungsgemäß einen direkten und somit auch schnellen Transport von Paletten zwischen den Palettenplätzen 3a-3f gewährleisten. Die Einrichtungen der Montagezelle 1 sind zwei manuelle Doppelmontageplätze 4, 5, eine Fügeeinrichtung 6, ein zentrales Werkstücklager 7 und Pufferplätze 8, 9.

Das Drei-Achs-Modul 2 kann auf einer horizontalen, geraden Führung 10 in X-Richtung mittels eines nicht dargestellten Linearmotors verfahren werden. Weiterhin kann es in Z-Richtung vertikal, d.h. senkrecht zur Zeichenebene, auf und ab verfahren werden. Schließlich ist das Drei-Achs-Modul 2 noch in horizontaler Y-Richtung senkrecht zur X-Richtung teleskopierbar, um einen Zugriff auf Paletten zu ermöglichen, die auf den Palettenplätzen 3a-3f beiderseits der Führung 10 angeordnet sind.

Im Rahmen der Erfindung kann auch eine Transportvorrichtung mit mehr als drei Bewegungsachsen, beispielsweise ein 6-Achs-Modul, eingesetzt werden. Die Transportvorrichtung muss aber wenigstens drei Bewegungsachsen aufweisen, um als Drei-Achs-Modul 2 erfindungsgemäß eingesetzt werden zu können. Um eine Bewegung in Z-Richtung zu realisieren, kann ein Drei-Achs-Modul auch mit einer Kurzhubeinrichtung versehen sein. Die Kurzhubeinrichtung kann insbesondere mit einem festen Hub arbeiten. Als Kurzhubeinrichtung können beispielsweise Haken eingesetzt werden, die unter eine Palette schwenken und diese anheben können und umgekehrt. Ein typischer Hub einer Kurzhubeinrichtung beträgt 5 bis 10 mm; dies reicht aus, um eine Palette für ein horizontales Verfahren vorzubereiten.

Die manuellen Doppelmontagestationen 4, 5 umfassen jeweils zwei Palettenplätze 3a, 3b, die jeweils als manuelle Montagestationen ausgebildet sind. An jeder manuellen Doppelmontagestation 4, 5 ist nur ein Werker 11 tätig, der im Wechsel an der einen oder der anderen manuellen Montagestation bzw. dem einen oder anderen Palettenplatz 3a, 3b tätig ist; dies ist durch eine Strichelung des Werkers an der alternativen Arbeitsstelle angedeutet. Während der Werker 11 beispielsweise am Palettenplatz 3a Montagearbeiten an einer Baugruppe einer Palette durchführt, wird am anderen Palettenplatz 3b vom Drei-Achs-Modul 2 eine abgearbeitete Palette abtransportiert (etwa zu einem der Pufferplätze 8, 9) und eine abzuarbeitende Palette bereitgestellt.

Die Werkstücke, die der Werker 11 auf die Baugruppen der Paletten auflegen soll, werden entweder durch lokale Stapelboxen 12 bereitgestellt, oder aber sie sind auf der abzuarbeitenden Palette zwischenabgelegt und stammen aus dem zentralen Werkstücklager 7.

Die Montagezelle 1 umfasst weiterhin eine Fügeeinrichtung 6, die mit einem Werkzeug 13, etwa einem Pressadapter, Fügearbeiten an den Baugruppen der Paletten vornehmen kann. Die Fügeeinrichtung 6 umfasst einen Schlitten 14, der parallel zur X-Richtung mittels einer nicht dargestellten dritten Verfahrvorrichtung zwischen zwei Positionen verfahrbar ist. Die erste Position ist in Fig. 1 dargestellt, die weiter rechts liegende zweite Position ist durch die strichpunktierte Linie angedeutet. Auf dem Schlitten 14 sind zwei Palettenplätze 3e, 3f angeordnet. In der dargestellten ersten Position des Schlittens 14 ist der erste Palettenplatz 3e für das Drei-Achs-Modul 2 zugänglich, und am zweiten Palettenplatz 3f kann das Werkzeug 13 Fügearbeiten an einer dortigen Palette vornehmen. Nach Abschluss der Fügearbeiten wird der Schlitten 14 in die zweite Position verfahren, und die abgearbeitete Palette des zweiten Palettenplatzes 3f wird mittels des Drei-Achs-Moduls 2 durch eine abzuarbeitende Palette ersetzt. Gleichzeitig können an einer Palette des ersten Palettenplatzes 3e nunmehr Fügearbeiten vorgenommen werden.

Die Montagezelle 1 verfügt weiterhin über ein zentrales Werkstücklager 7, umfassend einen Palettenplatz 3c, einen Werkstückverteiler 15 sowie Vorratsbehälter 16 für Werkstücke. Bei empfindlichen Werkstücken können statt Vorratbehältern auch Werkstückhalter oder dergleichen vorgesehen sein. Der Werkstückverteiler 15 ist einlang einer Führung 17 verfahrbar sowie senkrecht dazu vertikal und horizontal verfahr- oder teleskopierbar. Befindet sich eine Palette am Palettenplatz 3c, so transportiert der Werkstückverteiler Werkstücke zu dieser Palette. Die Werkstücke werden entsprechend der Baugruppe auf der Palette ausgewählt und auf der Palette abgelegt (Zwischenablage). Die eigentliche Montage erfolgt an einer der Montagestationen.

Schließlich umfasst die Montagezelle 1 noch Pufferplätze 8, 9. An den zugehörigen Palettenplätzen 3d, die als Pufferplätze 8, 9 ausgebildet sind, werden an dort angeordneten Paletten keinerlei Montagearbeiten durchgeführt. Vielmehr lagern die Paletten dort, bis die Einrichtung bzw. der Palettenplatz, zu der eine jeweilige Palette als nächstes gebracht werden soll, freigeworden ist.

Die Montagezelle 1 ist aus vier Basisplattformen 18a, 18b, 18c, 18d aufgebaut, die in X-Richtung aneinandergereiht und reversibel aneinander befestigt sind. Auf der Basisplattform 18b sind beispielsweise die beiden manuellen Doppelmontagestationen 4, 5 sowie ein Abschnitt der Führung 10 angeordnet. Die Fügeeinrichtung 6 ist so groß, dass sie auf zwei Basisplattformen 18c, 18d befestigt ist. Die Basisplattformen 18a-18d verfügen über standardisierte Aufnahmen zur reversiblen Befestigung von darauf angeordneten Einrichtungen. Durch diesen modularen Aufbau ist die Montagezelle zum einen leicht erweiterbar, etwa durch Anschluss weiterer Basisplattformen in X-Richtung. Zum anderen ist die Montagezelle 1 auch leicht umbaubar. Soll etwa die manuelle Doppelmontagestation 4 durch eine automatische Montagestation ersetzt werden, so kann die Basisplattform 18b in der Montagezelle 1 verbleiben, und nur die Doppelmontagestation 4 in der standardisierten Aufnahme der Basisplattform 18b braucht ausgetauscht zu werden.

Die Basisplattformen 18a-18d sind mit (nicht dargestellten) Stellfüßen als Niveauausgleichselemente versehen. Dadurch kann die Montagezelle 1 auch auf einem unebenen Boden leicht eben ausgerichtet werden.

Eine beispielhafte Arbeitsabfolge einer Palette in der Montagezelle 1 könnte wie folgt lauten: Aufnahme einer Palette aus den Pufferplätzen 8 (die gleichzeitig als Eingangsbereich für abzuarbeitende Paletten mit teilmontierten Baugruppen dienen), Transport zur manuellen Doppelmontagestation 4, dort Auflegen einiger Werkstücke auf die Baugruppe, Transport zur Fügeeinrichtung 6, dort Verpressen von bereits aufliegenden Werkstücken, Transport zu den Pufferplätzen 9, Transport zum zentralen Werkstücklager 7, dort Zwischenablage einiger Werkstücke auf der Palette, Transport zur manuellen Montagestation 5, dort Aufsetzen der zwischengelagerten Werkstücke und weiterer Kleinteile auf die Baugruppe, Transport zu den Pufferplätzen 9, Transport zur Fügeeinrichtung 6, dort Verpressen von einigen bereits aufliegenden Werkstücken, Transport zu den Pufferplätzen 8, Transport zum zentralen Werkstücklager 7, dort Zwischenablage weiterer Werkstücke auf der Palette, Transport zur manuellen Montagestation 4, dort Aufsetzen der zwischengelagerten Werkstücke auf die Baugruppe, Transport zu den Pufferplätzen 9, Transport zur Fügeeinrichtung 6, dort Verpressen von einigen bereits aufliegenden Werkstücken, Transport zu den Pufferplätzen 9 (die gleichzeitig als Ausgangsbereich für abgearbeitete Paletten dienen).

Bei der erfindungsgemäße Montagezelle 1 kann die Auslastung von Montagestationen der Montagezelle 1 erhöht werden, indem dieselbe Montagestation für verschiedene, alternative Montagearbeitsabläufe eingesetzt wird. Die Auslastung von Montagestationen einer erfindungsgemäßen Montagezelle 1 kann erfindungsgemäß aber auch dadurch gesteigert werden, dass zur Durchführung von besonders zeitaufwändigen Montagearbeitsabläufen mehrere Montagestationen parallel eingesetzt werden.

Das heißt, wenn bei einer Baugruppe einer Palette ein besonders zeitaufwändiger Montagearbeitsablauf ansteht, so kann die Palette zu einer von mehreren Montagestationen gebracht werden, die alle jeweils dazu eingerichtet sind, diesen Montagearbeitsablauf durchzuführen. Durch Erweiterung um weitere Montagestationen, an denen der zeitaufwändige Montagearbeitsablauf eingerichtet ist, kann ggf. die Taktung der Montage einer Baugruppe in der Montagezelle nachträglich bei nur geringem Aufwand erhöht werden.

Die Montagezelle 1 ist als ein räumlich geschlossenes System ausgebildet, das einen Zugang nur an definierten Wartungszugängen gestattet. Am rechts-und/oder linksseitigen Ende der Führung 10 können solche Wartungszugänge, etwa Türen, eingerichtet sein. Soweit bei der Montagezelle 1 nicht der gesamte Raum entlang der Führung 10 von Einrichtungen wie Montagestationen genutzt bzw. eingenommen ist, sind an ungenutzten Abschnitten Schutzwände eingerichtet. Dadurch können Personen in der Nähe der Montagezelle 1 nicht aus Versehen in den Bereich des sich schnell bewegenden Drei-Achs-Moduls 2 gelangen und womöglich verletzt werden.

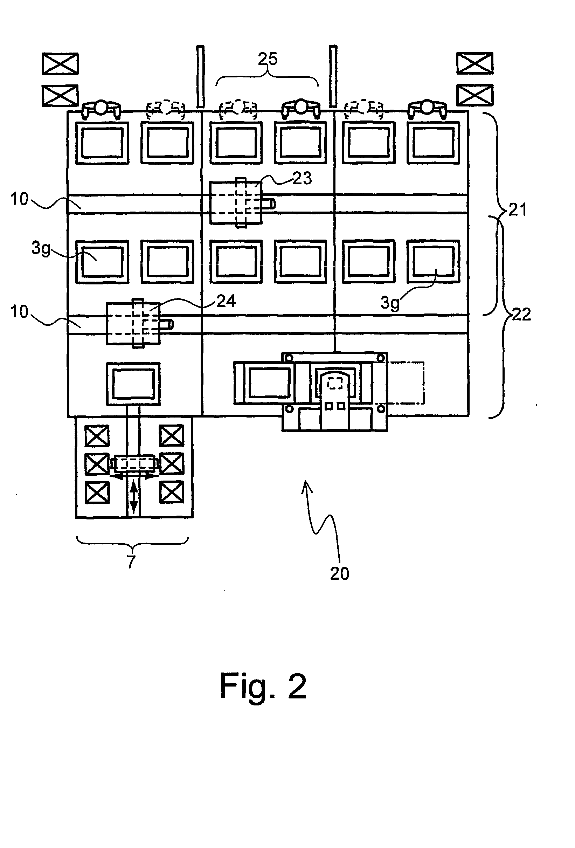

Die **Fig. 2** zeigt ein erfindungsgemäßes Montagesystem 20 umfassend zwei Montagezellen 21, 22 in schematischer Aufsicht. Die beiden Montagezellen 21, 22 überlappen in einem Bereich zwischen den beiden Führungen 10 der beiden Drei-Achs-Module 23, 24. In diesem Überlappungsbereich befinden sich Palettenplätze 3g, die als Pufferplätze ausgebildet sind. Paletten auf diesen Palettenplätzen 3g können sowohl vom Drei-Achs-Modul 23 der Montagezelle 21 als auch vom Drei-Achs-Modul 24 der Montagezelle 22 gehandhabt werden. Die Palettenplätze 3g stellen somit Übergabeplätze für Paletten zwischen den beiden Montagezellen 21, 22 dar.

In der Arbeitsabfolge einer Baugruppe einer Palette kann erfindungsgemäß die Montagezelle 21, 22 gewechselt werden, insbesondere auch mehrfach. Beispielsweise verfügt eine manuelle Doppelmontagestation 25 der in der Figur 2 oberen Montagezelle 21 über keinen lokalen Werkstückvorrat. An der manuellen Doppellmontagestation 25 ankommende Paletten haben zuvor das zentrale Werkstücklager 7 der unteren Montagezelle 22 angefahren und alle zu montierenden Werkstücke dort abgeholt.

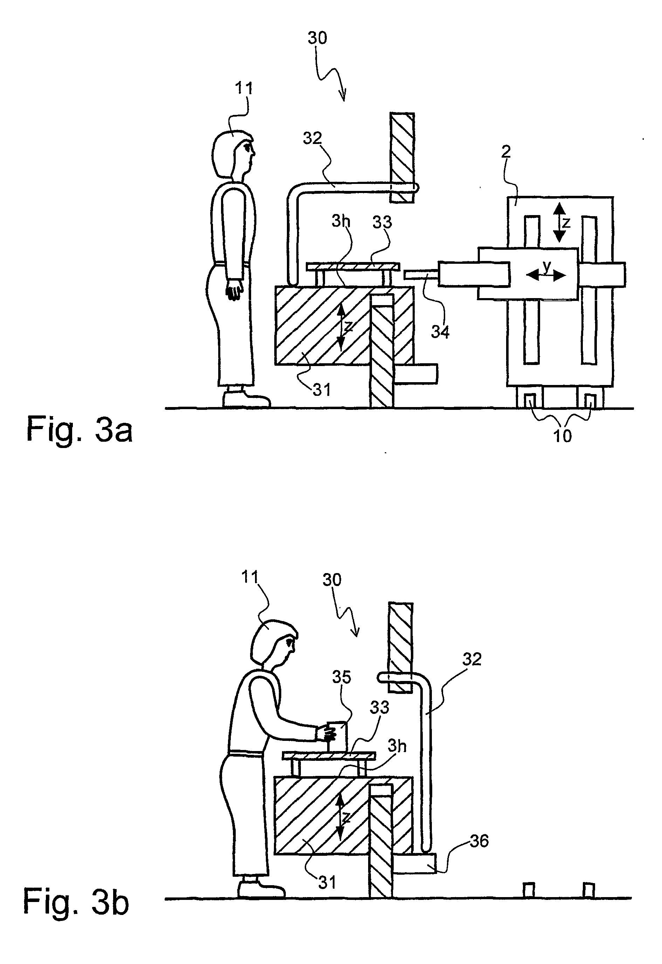

Die **Fig. 3a** illustriert in schematischer Seitenansicht eine manuelle Montagestation 30, die Teil einer erfindungsgemäßen Montagezelle ist. Die manuelle Montagestation 30 umfasst einen Montagetisch 31 und einen Schutzschild 32, der als Sicherheitsrolladen ausgebildet ist. Auf der Oberseite des Montagetischs 31 ist eine Palette 33 abgelegt, die für manuelle Montagearbeiten bereit ist. Insofern stellt die Oberseite des Montagetisches 31 einen Palettenplatz 3h dar. Die Palette 33 wurde gerade von einem Drei-Achs-Modul 2 antransportiert. Ein Teleskoparm 34 des Drei-Achs-Moduls 2 hatte zum Zwecke des Transports der Palette 33 diese untergriffen und wird in der Fig. 3a gerade wieder eingefahren bzw. zum Drei-Achs-Modul 2 zurückgezogen. Das Drei-Achs-Modul 2 ist auf einer senkrecht zur Zeichenebene verlaufenden Führung 10 verfahrbar (X-Richtung).

Der Schutzschild 32 befindet sich in Fig. 3a in einer ersten Position, in der ein Zugang für einen Werker 11 zum Palettenplatz 3h und zur Palette 33 vollständig versperrt ist. Der Werker 11 kann daher nicht durch den Transport der Palette 33 durch das Drei-Achs-Modul 2, insbesondere durch das Verfahren des Teleskoparms 34, gefährdet werden. Hingegen besteht ein freier Zugang für das Drei-Achs-Modul 2 zum Palettenplatz 3h.

In **Fig. 3b** wird die manuelle Montagestation 30 von Fig. 3a in einer zweiten Position des Schutzschilds 32 gezeigt. Das Schutzschild 32 schließt den vormaligen Zugang für das Drei-Achs-Modul 2 zum Palettenplatz 3h bzw. zur Palette 33 vollständig ab. Hingegen besteht ein freier Zugang für den Werker 11 zum Palettenplatz 3h bzw. zur Palette 33. Der Werker 11 kann daher ein Werkstück 35 auf die Palette 33 bzw. auf eine (nicht näher dargestellte) Baugruppe der Palette 33 aufsetzen.

Zumindest der Montagetisch 31 der manuellen Montagestation 30 ist höhenverstellbar ausgebildet, d.h. die Oberkante des Montagetischs 31 kann vertikal in z-Richtung verfahren werden. Dazu wird ein Motor 36 eingesetzt; es sind alternativ aber auch manuelle Verfahreinrichtungen, etwa ein Spindeltrieb, denkbar. Wenn ein neuer Werker 11 an der manuellen Montagestation 30 tätig wird, wird die Z-Position des Montagetischs 31 an dessen Körpergröße angepasst. Die Z-Position des Montagetischs 31 wird an eine Steuerung des Drei-Achs-Moduls gemeldet, bevorzugt automatisch und elektronisch, so dass das Drei-Achs-Modul beim An- und Abtransportieren einer Palette 33 seinerseits eine korrekte Z-Position für den Teleskoparm einstellen kann.

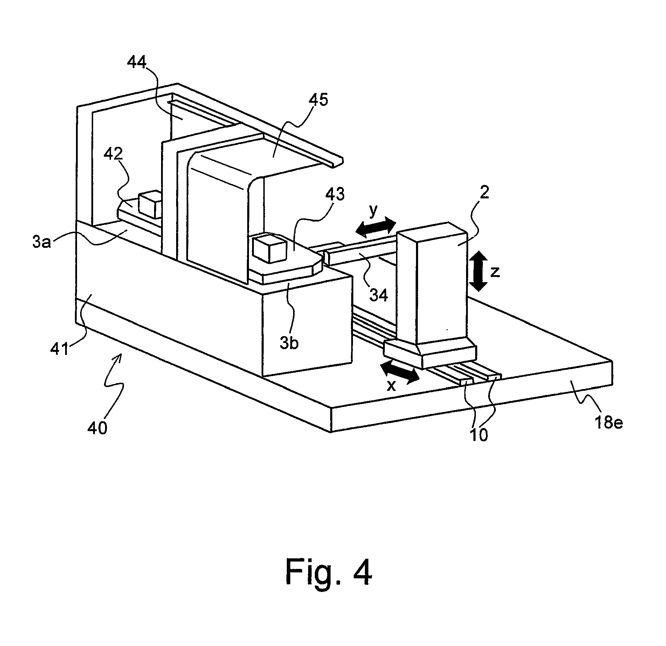

**Fig. 4** zeigt eine Schrägansicht einer manuellen Doppelmontagestation 40 mit Drei-Achs-Modul 2 einer erfindungsgemäßen Montagezelle. Die manuelle Doppelmontagestation 40 umfasst zwei Palettenplätze 3a, 3b, die jeweils als manuelle Montagestationen ausgebildet sind. Auf beiden Palettenplätzen 3a, 3b befindet sich jeweils eine Palette 42, 43.

Am linken Palettenplatz 3a kann ein Werker (nicht dargestellt) an der für ihn von vorne zugänglichen Palette 42 Montagearbeiten durchführen, insbesondere Werkstücke aufsetzen. Ein Sicherheitsrolladen 44 schließt diese manuelle Montagestation bzw. den Palettenplatz 3a nach hinten hin zum Drei-Achs-Modul 2 bzw. dessen Verfahrbereich ab.

Am rechten Palettenplatz 3b sind keinerlei Montagearbeiten durch einen Werker an der Palette 43 möglich. Ein Sicherheitsrolladen 45 schließt diese manuelle Montagestation bzw. dessen Palettenplatz 3b nach vorne hin zu einem (nicht eingezeichneten) Werker ab. In der Figur 4 ist eine rechtsseitige Wand bei der rechten manuellen Montagestation der Übersichtlichkeit wegen weggelassen. Der Palettenplatz 3b ist in der gezeigten Position des Sicherheitsrolladens 45 aber von hinten für das Drei-Achs-Modul 2 zugänglich, so dass die Palette 43 transportiert werden kann.

Für den Transport einer Palette besitzt das Drei-Achs-Modul 2 drei Bewegungsmöglichkeiten: Es kann in X-Richtung entlang der Führung 10 hin und zurück verfahren werden, weiterhin kann ein Teleskoparm 34 in Y-Richtung horizontal und senkrecht zur X-Richtung verfahren werden, und der Teleskoparm 34 bzw. dessen Aufhängung kann vertikal in Z-Richtung auf und ab verfahren werden.

Die manuelle Doppelmontagestation 40 und das Dreiachsmodul 2 samt seiner Führung 10 sind auf einer Basisplattform 18e angeordnet.

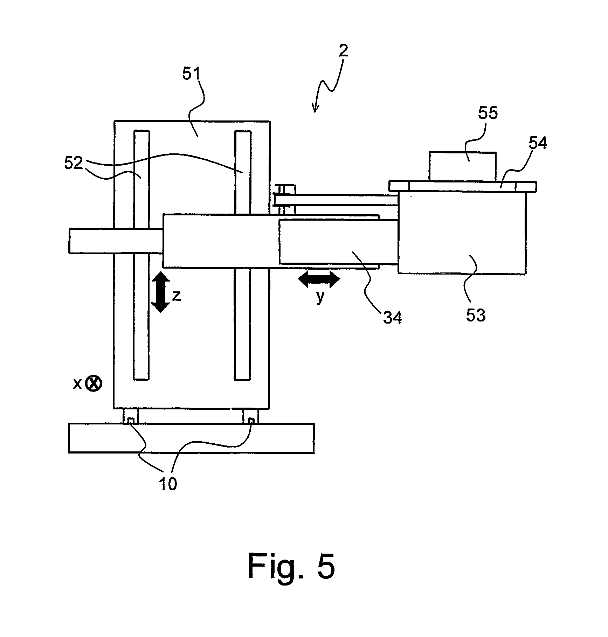

In **Fig. 5** ist ein Drei-Achs-Modul 2, wie es bei der vorliegenden Erfindung eingesetzt werden kann, in einer schematischen Seitenansicht näher erläutert.

Das Drei-Achs-Modul 2 umfasst einen Grundkörper 51, der auf einer Führung 10 mittels eines im Grundkörper 51 angeordneten Linearmotors in X-Richtung (senkrecht zur Zeichenebene) verfahrbar ist. Am Grundkörper 51 sind Vertikalführungen 52 angeordnet, auf denen ein Teleskoparm 34 bzw. dessen Aufhängung vertikal in Z-Richtung verfahrbar ist. Der Teleskoparm 34 ist in Y-Richtung horizontal nach links und rechts ausfahrbar; in Fig. 5 ist eine nach rechts ausgefahrene Position eingezeichnet. Die Y-Ausfahrbarkeit von links nach rechts und umgekehrt ist insbesondere auch bei aufgenommener Palette gegeben.

Am Ende des Teleskoparms 34 ist ein Palettentransportkopf 53 angeordnet, der so ausgebildet ist, dass er eine Palette 54 sicher halten und transportieren kann. Der Palettentransportkopf 53 kann dazu Greifwerkzeuge oder Klemmen aufweisen. Im einfachsten Fall sind der Palettentransportkopf 53 und die Palette 54 so ausgebildet, dass die Palette mit dem Palettentransportkopf 53 untergriffen werden kann und beim Anheben des Palettentransportkopfes 53 die Palette 54 auf dem Palettentransportkopf 53 rutsch- und kippsicher eben aufliegt. Auf der Palette 54 befindet sich eine teilweise montierte Baugruppe 55.

Alle Freiheitsgrade der Bewegung (X, Y, Z) des Drei-Achs-Moduls 2 können unabhängig voneinander angesteuert werden. Die Steuerung erfolgt typischerweise NC- oder CNC-basiert.

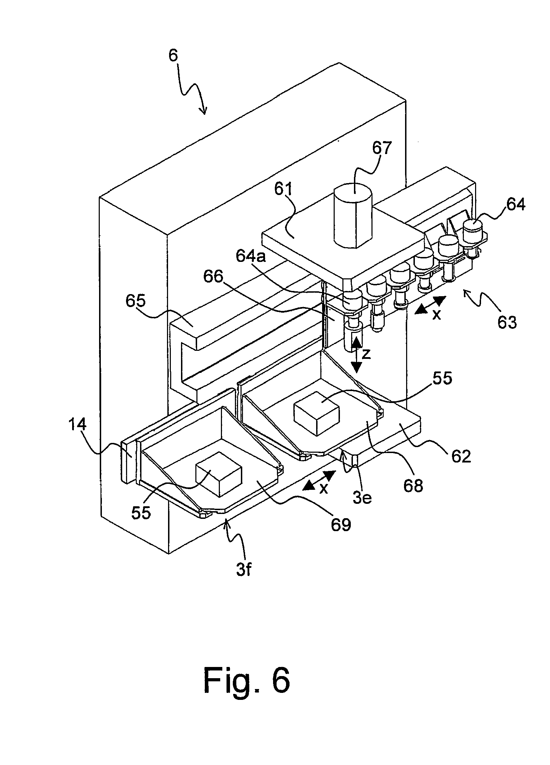

**Fig. 6** zeigt eine schematische Schrägansicht einer Fügeeinrichtung 6, welche in einer erfindungsgemäßen Montagezelle eingesetzt werden kann.

Die Fügeeinrichtung 6 verfügt über eine obere Pressenplatte 61 und einen festen Pressentisch 62. Die Fügeeinrichtung 6 verfügt weiterhin über eine Wechselvorrichtung 63, mit der zwischen verschiedenen Montagewerkzeugen 64, nämlich Pressadaptern, gewechselt werden kann. Dazu kann in einer horizontalen Führung 65 in X-Richtung ein Sechsfach-Magazin 66 mit sechs Pressadaptern verfahren werden, so dass einer der Pressadapter in einer für einen Pressvorgang geeigneten, ausgerichteten Position zwischen Pressenplatte 61 und Pressentisch 62 angeordnet ist. In der Fig. 6 ist der äußerst linke Pressadapter 64a für einen Pressvorgang ausgerichtet. Mit Hilfe eines Spindelmotors 67 kann dann der Pressadapter 64a auf den Pressentisch 62 zu in Z-Richtung abgesenkt und wieder angehoben werden.

Eine Palette mit einem zu verpressenden Werkstück bzw. einer Baugruppe wird der Fügeeinrichtung 6 mit einem Schlitten 14 gehandhabt. Der Schlitten 14 verfügt über zwei Palettenplätze 3e, 3f, auf denen Paletten 68, 69 mit Baugruppen 55 angeordnet sind. Der Schlitten 14 ist in X-Richtung mittels einer nicht dargestellten dritten Verfahrvorrichtung verfahrbar. Für einen Fügevorgang wird ein Palettenplatz samt Palette, etwa Palettenplatz 3e samt Palette 68, zwischen Pressenplatte 61 und Pressentisch 62 verfahren, so dass das zu fügende Werkstück der Baugruppe 55 mit dem eingerichteten Pressadapter 64a zusammenwirken kann. Während dann am Palettenplatz 3e der Fügevorgang stattfindet, kann am anderen Palettenplatz 3f ein Palettenwechsel vorgenommen werden, wozu das Drei-Achs-Modul eingesetzt wird.

Danach wird der Schlitten 14 so (in Fig. 6 nach rechts) verfahren, dass sich der andere Palettenplatz 3f bzw. die Baugruppe 55 der dortigen Palette 69 für einen Fügevorgang über dem Pressentisch 62 befindet, und am Palettenplatz 3e kann dann ein Palettenwechsel durch das Drei-Achs-Modul stattfinden.

Während des Verfahrens des Schlittens 14 wird gegebenenfalls das Montagewerkzeug 64, d.h. der Pressadapter, gewechselt.

## Patentansprüche

1. Montagezelle (1; 21, 22) geeignet zur Montage von Baugruppen (55) aus Werkstücken (35) auf Paletten (33; 42, 43; 54; 68, 69),
umfassend mehrere Palettenplätze (3a, 3b, 3c, 3d, 3e, 3f; 3g; 3h), an denen sich Paletten (33; 42, 43; 54; 68, 69) befinden können, wobei zumindest ein Teil der Palettenplätze (3a-3h) als Montagestationen zur Durchführung von Montagearbeiten an den Baugruppen (55) der Paletten (33; 42, 43; 54; 68, 69) ausgebildet ist,
und umfassend mindestens eine Transportvorrichtung zum Transport der Paletten (33; 42, 43; 54; 68, 69) zwischen den Palettenplätzen (3a-3h), wobei die Transportvorrichtung als Drei-Achs-Modul (2; 23, 24) ausgebildet ist,
das eine einzelne Palette (33; 42, 43; 54; 68, 69) von jedem Palettenplatz (3a-3h) innerhalb der Montagezelle (1; 21, 22) direkt zu jedem anderen, freien Palettenplatz (3a-3h) innerhalb der Montagezelle (1; 21, 22) transportieren kann,
**dadurch gekennzeichnet,**
**dass** die Montagezelle (1; 21, 22) mindestens eine manuelle Doppelmontagestation (4, 5; 25; 40) aufweist, wobei jede manuelle Doppelmontagestation (4, 5; 25; 40) zwei manuelle Montagestationen (30) umfasst, an denen ein Werker (11) im Wechsel Montagearbeiten durchführen kann.

2. Montagezelle (1; 21, 22) nach Anspruch 1, **dadurch gekennzeichnet, dass** die manuelle Doppelmontagestation (4, 5; 25; 40) so ausgebildet ist, dass während einer Bearbeitung an einer der manuellen Montagestationen (30) der manuellen Doppelmontagestation (4, 5; 25; 40) an der anderen manuellen Montagestation (30) der manuellen Doppelmontagestation (4, 5; 25; 40) eine bereits abgearbeitete Palette (33; 42, 43; 54; 68, 69) durch eine noch abzuarbeitende Palette (33; 42, 43; 54; 68, 69) ersetzt wird.

3. Montagezelle (1; 21, 22) nach einem der vorhergehenden Ansprüche, **dadurch gekennzeichnet, dass** die beiden manuellen Montagestationen (30) der manuellen Doppelmontagestation (4, 5; 25; 40) nebeneinanderliegende Palettenplätze (3a, 3b) aufweisen, sodass ein Werker sofort von einer der manuellen Montagestationen (30) der manuellen Doppelmontagestation (4, 5; 25; 40) zur anderen manuellen Montagestation (30) der manuellen Doppelmontagestation (4, 5; 25; 40) wechseln kann.

4. Montagezelle (1; 21, 22) nach einem der vorhergehenden Ansprüche, **dadurch gekennzeichnet, dass** die beiden manuellen Montagestationen (30) der manuellen Doppelmontagestation (4, 5; 25; 40) eine gemeinsame Trennwand aufweisen, die zwischen den beiden Palettenplätzen (3a, 3b) der manuellen Montagestationen (30) der manuellen Doppelmontagestation (4, 5; 25; 40) angeordnet ist.

5. Montagezelle (1; 21, 22) nach einem der vorhergehenden Ansprüche, **dadurch gekennzeichnet, dass** zumindest ein Teil der Palettenplätze (3d; 3g) als Pufferplätze (8, 9) ausgebildet ist, an denen keinerlei Montagearbeiten an den Baugruppen (55) vorgenommen werden können.

6. Montagezelle (1; 21, 22) nach Anspruch 5, **dadurch gekennzeichnet, dass** mehrere Pufferplätze (8, 9) vertikal übereinander angeordnet sind, insbesondere wobei mindestens drei Pufferplätze (8, 9) vertikal übereinander angeordnet sind.

7. Montagezelle (1:21,22) nach einem der vorhergehenden Ansprüche, **dadurch gekennzeichnet, dass** die Montagezelle (1; 21, 22) mindestens eine manuelle Montagestation (30) für die Durchführung von Montagearbeiten durch einen Werker (11) umfasst, wobei die manuelle Montagestation (30) höhenverstellbar ausgebildet ist.

8. Montagezelle (1; 21, 22) nach einem der vorhergehenden Ansprüche,
**dadurch gekennzeichnet,**
**dass** die Montagezelle (1; 21, 22) wenigstens eine manuelle Montagestation (30) aufweist, die einen verfahrbaren Schutzschild (32), insbesondere einen Sicherheitsrolladen (44, 45), aufweist, der zwischen zwei Positionen verfahrbar ist,
**dass** in der ersten Position des Schutzschildes (32) ein Zugang für einen Werker (11) zu dem Palettenplatz (3a, 3b; 3h) der manuellen Montagestation (30) vollständig versperrt ist, aber ein Zugang für die Transportvorrichtung zu dem Palettenplatz (3a, 3b; 3h) der manuellen Montagestation (30) frei ist,
und **dass** in der zweiten Position des Schutzschildes (32) der Zugang für einen Werker (11) zu dem Palettenplatz (3a, 3b; 3h) der manuellen Montagestation (30) zur Durchführung von Montagearbeiten frei ist, aber der Zugang für die Transportvorrichtung zu dem Palettenplatz (3a, 3b; 3h) der manuellen Montagestation (30) vollständig versperrt ist.

9. Montagezelle (1; 21, 22) nach Anspruch 8, **dadurch gekennzeichnet, dass** der Schutzschild (32) in der ersten Position den Palettenplatz (3a, 3b; 3h) der manuellen Montagestation (30) lichtdicht abschließt.

10. Montagezelle (1; 21, 22) nach einem der vorhergehenden Ansprüche, **dadurch gekennzeichnet, dass** die Montagezelle (1; 21, 22) mindestens eine automatische Montagestation aufweist, die eine Wechselvorrichtung (63) zum automatischen Wechsel zwischen mehreren Montagewerkzeugen (64) aufweist.

11. Montagezelle (1; 21, 22) nach einem der vorhergehenden Ansprüche,
**dadurch gekennzeichnet,**
**dass** die Montagezelle (1; 21, 22) mindestens eine automatische Montagestation aufweist,
und **dass** die automatische Montagestation eine eigene, erste Verfahrvorrichtung aufweist, die eine Palette (33; 42, 43; 54; 68, 69) relativ zu einem in der Montagezelle (1; 21, 22) ortsfesten Werkzeug (13) der automatischen Montagestation verfahren kann, so dass unterschiedliche Orte auf der Palette (33; 42, 43; 54; 68, 69) für das Werkzeug (13) zugänglich werden.

12. Montagezelle (1; 21, 22) nach einem der vorhergehenden Ansprüche,
**dadurch gekennzeichnet,**
**dass** die Montagezelle (1; 21, 22) mindestens eine automatische Montagestation aufweist,
**dass** die automatische Montagestation wenigstens zwei Palettenplätze und einen Montageplatz für die Durchführung von Montagearbeiten auf einer Palette (33; 42, 43; 54; 68, 69) umfasst, insbesondere wobei der Montageplatz einen weiteren, für die Transportvorrichtung zugänglichen Palettenplatz darstellt,
und **dass** die automatische Montagestation eine eigene, zweite Verfahrvorrichtung aufweist, mit der eine einzelne Palette zwischen dem Montageplatz und jedem Palettenplatz der automatischen Montagevorrichtung verfahren werden kann und umgekehrt.

13. Montagezelle (1; 21, 22) nach einem der vorhergehenden Ansprüche,
**dadurch gekennzeichnet,**
**dass** die Montagezelle (1; 21, 22) mindestens eine automatische Montagestation aufweist,
**dass** die automatische Montagestation einen ersten und einen zweiten Palettenplatz (3e, 3f) umfasst, die beide auf einem gemeinsamen Schlitten (14) angeordnet sind, wobei der Schlitten (14) mittels einer dritten Verfahrvorrichtung zwischen zwei Positionen verfahrbar ist,
**dass** in der ersten Position des Schlittens (14) der erste Palettenplatz (3e) für die Transportvorrichtung zugänglich ist und eine Palette (69) des zweiten Palettenplatzes (3f) für Montagearbeiten der automatischen Montagestation zugänglich ist,
und **dass** in der zweiten Position des Schlittens (14) der zweite Palettenplatz (3f) für die Transportvorrichtung zugänglich ist und eine Palette (68) des ersten Palettenplatzes (3e) für Montagearbeiten der automatischen Montagestation zugänglich ist.

14. Montagezelle (1; 21, 22) nach einem der Ansprüche 10 bis 13, **dadurch gekennzeichnet, dass** die automatische Montagestation als Fügeeinrichtung (6) ausgebildet ist.

15. Montagezelle (1; 21, 22) nach einem der vorherigen Ansprüche, **dadurch gekennzeichnet, dass** die Montagezelle (1; 21, 22) ein zentrales Werkstücklager (7) mit mindestens einem Palettenplatz (3c) und einem Werkstückverteiler (15) aufweist, wobei der Werkstückverteiler (15) so ausgebildet ist, dass er Werkstücke (35) aus dem zentralen Werkstücklager (7) zu einer Palette (33; 42, 43; 54; 68, 69) auf dem mindestens einen Palettenplatz (3c) des Werkstücklagers (7) transportieren kann.

16. Montagezelle (1; 21, 22) nach einem der vorhergehenden Ansprüche, **dadurch gekennzeichnet, dass** die Transportvorrichtung eine Dreheinrichtung zum Rotieren einer Palette (33; 42, 43; 54; 68, 69) um eine vertikale Achse aufweist.

17. Montagezelle (1; 21, 22) nach einem der vorhergehenden Ansprüche,
**dadurch gekennzeichnet,**
**dass** die Transportvorrichtung auf einer horizontalen Führung (10) in einer X-Richtung vorwärts und rückwärts verfahrbar ist,
und **dass** die Palettenplätze (3a-3h) auf einer Seite der Führung (10) oder beiderseits der Führung (10) angeordnet sind.

18. Montagezelle (1; 21, 22) nach Anspruch 17, **dadurch gekennzeichnet, dass** die Transportvorrichtung mit einem Linearmotor entlang der Führung (10) verfahrbar ist.

19. Montagezelle (1; 21, 22) nach einem der Ansprüche 17 oder 18, **dadurch gekennzeichnet,**
**dass** mehrere identische Basisplattformen (18a, 18b, 18c, 18d; 18e) vorgesehen sind, die in X-Richtung hintereinander angeordnet und reversibel aneinander befestigt sind,
und **dass** die Basisplattformen (18a-18e) standardisierte Aufnahmen aufweisen, wobei zumindest in einem Teil der Aufnahmen Montagestationen und/oder Pufferplätze (8, 9) und/oder Abschnitte der Führung (10) der Transportvorrichtung und/oder zentrale Werkstücklager (7) und/oder andere Einrichtungen der Montagezelle (1; 21, 22) mit entsprechenden Fußteilen reversibel befestigt sind, insbesondere festgeschraubt sind.

20. Montagesystem (20) umfassend wenigstens zwei Montagezellen (21, 22) nach einem der vorhergehenden Ansprüche, **dadurch gekennzeichnet, dass** die Montagezellen (21, 22) jeweils Palettenplätze (3g) aufweisen, die als Pufferplätze ausgebildet sind,
und dass zumindest ein Teil der Pufferplätze jeder Montagezelle (21, 22) zwei Montagezellen (21, 22) gleichzeitig zugeordnet ist und somit für die Transportvorrichtungen dieser beiden Montagezellen (21, 22) zugänglich ist (=Übergabeplätze).

21. Montagesystem (20) nach Anspruch 20, umfassend wenigstens zwei Montagezellen (21, 22) nach einem der Ansprüche 17 bis 19, **dadurch**
**gekennzeichnet,**
**dass** die Führungen (10) zweier benachbarter Montagezellen (21, 22) parallel verlaufen,
und **dass** Pufferplätze, die beiden Montagezellen (21, 22) gleichzeitig zugeordnet sind, zwischen diesen Führungen (10) vorgesehen sind.

22. Verfahren zum Betrieb einer Montagezelle (1; 21, 22), die nach einem der Ansprüche 1 bis 19 ausgebildet ist, **dadurch gekennzeichnet,**
**dass** an mindestens einer Montagestation alternative Montagearbeitsabläufe durchführbar sind,
und **dass** abhängig von der in der Montagestation befindlichen Palette (33; 42, 43; 54; 68, 69) einer der alternativen Montagearbeitsabläufe ausgewählt und durchgeführt wird.

23. Verfahren nach Anspruch 22, **dadurch gekennzeichnet, dass** in der Arbeitsabfolge einer Baugruppe (55) einer Palette (33; 42, 43; 54; 68, 69) dieselbe Palette (33; 42, 43; 54; 68, 69) mehrfach zur selben Montagestation transportiert wird und die Baugruppe (55) der Palette (33; 42, 43; 54; 68, 69) dann jeweils unterschiedliche Montagearbeitsabläufe an dieser Montagestation durchläuft.

24. Verfahren nach Anspruch 22 oder 23, **dadurch gekennzeichnet, dass** in der Montagezelle (1; 21, 22) gleichzeitig verschiedene Arten von Paletten (33; 42, 43; 54; 68, 69) mit jeweils unterschiedlichen Baugruppen (55) abgearbeitet werden.

25. Verfahren zum Betrieb einer Montagezelle (1; 21, 22) nach Anspruch 24,
**dadurch gekennzeichnet,**
**dass** die Montagezelle (1; 21, 22) N manuelle Montagestationen (30) aufweist, wobei N größer oder gleich 2 ist,
**dass** in der Montagezelle (1; 21, 22) wenigstens M Arten von Paletten (33; 42, 43; 54; 68, 69) mit jeweils unterschiedlichen Baugruppen (55) abgearbeitet werden,
**dass** M größer oder gleich N ist,
und **dass** für jede manuelle Montagestation (30) wenigstens eine Art von Palette (33; 42, 43; 54; 68, 69) vorgesehen ist, in deren Arbeitsabfolge diese manuelle Montagestation (30) vor jeder anderen manuellen Montagestation (30) an der Reihe ist.

## Claims

1. An assembly cell (1; 21, 22) suitable for the assembly of subassemblies (55) made up of workpieces (35) on pallets (33; 42, 43; 54; 68, 69),
comprising a plurality of pallet locations (3a, 3b, 3c, 3d, 3e, 3f; 3g; 3h) at which pallets (33; 42, 43; 54; 68, 69) may be situated, wherein at least some of the pallet locations (3a-3h) are in the form of assembly stations for carrying out assembly work on the subassemblies (55) of the pallets (33; 42, 43; 54; 68, 69),
and comprising at least one transport device for transport of the pallets (33; 42, 43; 54; 68, 69) between the pallet locations (3a-3h),
wherein the transport device is in the form of a three-axis module (2; 23, 24)
which is able to transport an individual pallet (33; 42, 43; 54; 68, 69) from every pallet location (3a-3h) within the assembly cell (1; 21, 22) directly to every other, free pallet location (3a-3h) within the assembly cell (1; 21, 22),
**characterised in that**
the assembly cell (1; 21, 22) has at least one manual double assembly station (4, 5; 25; 40),
wherein each manual double assembly station (4, 5; 25; 40) comprises two manual assembly stations (30) at which an operative (11) is able to carry out assembly work alternately.

2. An assembly cell (1; 21, 22) according to claim 1, **characterised in that** the manual double assembly station (4, 5; 25; 40) is configured in such a manner that, during a processing operation at one of the manual assembly stations (30) of the manual double assembly station (4, 5; 25; 40), at the other manual assembly station (30) of the manual double assembly station (4, 5; 25; 40) an already processed pallet (33; 42, 43; 54; 68, 69) is replaced by a pallet (33; 42, 43; 54; 68, 69) that is yet to be processed.

3. An assembly cell (1; 21, 22) according to either of the preceding claims, **characterised in that** the two manual assembly stations (30) of the manual double assembly station (4, 5; 25; 40) have pallet locations (3a, 3b) disposed side by side, so that an operative is able to change immediately from one of the manual assembly stations (30) of the manual double assembly station (4, 5; 25; 40) to the other manual assembly station (30) of the manual double assembly station (4, 5; 25; 40).

4. An assembly cell (1; 21, 22) according to any one of the preceding claims, **characterised in that** the two manual assembly stations (30) of the manual double assembly station (4, 5; 25; 40) have a common partition wall disposed between the two pallet locations (3a, 3b) of the manual assembly stations (30) of the manual double assembly station (4, 5; 25; 40).

5. An assembly cell (1; 21, 22) according to any one of the preceding claims, **characterised in that** at least some of the pallet locations (3d; 3g) are in the form of buffer locations (8, 9) at which no assembly work may be performed on the subassemblies (55).

6. An assembly cell (1; 21, 22) according to claim 5, **characterised in that** a plurality of buffer locations (8, 9) are disposed vertically one above another, especially wherein at least three buffer locations (8, 9) are disposed vertically one above another.

7. An assembly cell (1; 21, 22) according to any one of the preceding claims, **characterised in that** the assembly cell (1; 21, 22) comprises at least one manual assembly station (30) for the carrying-out of assembly work by an operative (11), the manual assembly station (30) being adjustable in height.

8. An assembly cell (1; 21, 22) according to any one of the preceding claims,
**characterised in that**
the assembly cell (1; 21, 22) has at least one manual assembly station (30) which has a movable shield (32), especially a safety roller shutter (44, 45), which is movable between two positions,
in the first position of the shield (32), access to the pallet location (3a, 3b; 3h) of the manual assembly station (30) by an operative (11) is completely blocked, but access to the pallet location (3a, 3b; 3h) of the manual assembly station (30) by the transport device is free, and, in the second position of the shield (32), access to the pallet location (3a, 3b; 3h) of the manual assembly station (30) by an operative (11) is free for carrying out assembly work, but access to the pallet location (3a, 3b; 3h) of the manual assembly station (30) by the transport device is completely blocked.

9. An assembly cell (1; 21, 22) according to claim 8, **characterised in that**, in the first position, the shield (32) closes off the pallet location (3a, 3b; 3h) of the manual assembly station (30) in a light-tight manner.

10. An assembly cell (1; 21, 22) according to any one of the preceding claims, **characterised in that** the assembly cell (1; 21, 22) has at least one automatic assembly station which has a changing device (63) for automatically changing between a plurality of assembly tools (64).

11. An assembly cell (1; 21, 22) according to any one of the preceding claims,
**characterised in that**
the assembly cell (1; 21, 22) has at least one automatic assembly station,
and the automatic assembly station has its own, first movement device which is able to move a pallet (33; 42, 43; 54; 68, 69) relative to a tool (13) of the automatic assembly station, which tool (13) is in a fixed position in the assembly cell (1; 21, 22), so that different places on the pallet (33; 42, 43; 54; 68, 69) become accessible to the tool (13).

12. An assembly cell (1; 21, 22) according to any one of the preceding claims,
**characterised in that**
the assembly cell (1; 21, 22) has at least one automatic assembly station,
the automatic assembly station comprises at least two pallet locations and an assembly location for carrying out assembly work on a pallet (33; 42, 43; 54; 68, 69), especially
wherein the assembly location constitutes a further pallet location which is accessible to the transport device,
and the automatic assembly station has its own, second movement device with which an individual pallet may be moved between the assembly location and every pallet location of the automatic assembly device and *vice versa*.

13. An assembly cell (1; 21, 22) according to any one of the preceding claims,
**characterised in that**
the assembly cell (1; 21, 22) has at least one automatic assembly station,
the automatic assembly station comprises a first and a second pallet location (3e, 3f) both of which are disposed on a common carriage (14), wherein the carriage (14) is movable between two positions by means of a third movement device,
in the first position of the carriage (14), the first pallet location (3e) is accessible to the transport device and a pallet (69) of the second pallet location (3f) is accessible for assembly work of the automatic assembly station,
and, in the second position of the carriage (14), the second pallet location (3f) is accessible to the transport device and a pallet (68) of the first pallet location (3e) is accessible for assembly work of the automatic assembly station.

14. An assembly cell (1; 21, 22) according to any one of claims 10 to 13, **characterised in that** the automatic assembly station is in the form of a joining device (6).

15. An assembly cell (1; 21, 22) according to any one of the preceding claims, **characterised in that** the assembly cell (1; 21, 22) has a central workpiece store (7) with at least one pallet location (3c) and a workpiece distributor (15), the workpiece distributor (15) being configured in such a manner that it is able to transport workpieces (35) from the central workpiece store (7) to a pallet (33; 42, 43; 54; 68, 69) on the at least one pallet location (3c) of the workpiece store (7).

16. An assembly cell (1; 21, 22) according to any one of the preceding claims, **characterised in that** the transport device has a turning device for rotating a pallet (33; 42, 43; 54; 68, 69) about a vertical axis.

17. An assembly cell (1; 21, 22) according to any one of the preceding claims,
**characterised in that**
the transport device is movable forwards and backwards in an X-direction on a horizontal guide (10),
and the pallet locations (3a-3h) are disposed on one side of the guide (10) or on both sides of the guide (10).

18. An assembly cell (1; 21, 22) according to claim 17, **characterised in that** the transport device is movable along the guide (10) by a linear motor.

19. An assembly cell (1; 21, 22) according to either of claims 17 and 18, **characterised in that**
a plurality of identical base platforms (18a, 18b, 18c, 18d; 18e) are provided which are arranged one behind another in the X-direction and are reversibly fastened to one another, and the base platforms (18a-18e) have standardised mountings, wherein at least in some of the mountings assembly stations and/or buffer locations (8, 9) and/or sections of the guide (10) of the transport device and/or central workpiece stores (7) and/or other devices of the assembly cell (1; 21, 22) with appropriate foot parts are reversibly fastened, especially bolted down.

20. An assembly system (20) comprising at least two assembly cells (21, 22) according to any one of the preceding claims, **characterised in that**
the assembly cells (21, 22) each have pallet locations (3g) in the form of buffer locations, and at least some of the buffer locations of each assembly cell (21, 22) are associated with two assembly cells (21, 22) simultaneously and are accordingly accessible to the transport devices of those two assembly cells (21, 22) (= transfer locations).

21. An assembly system (20) according to claim 20, comprising at least two assembly cells (21, 22) according to any one of claims 17 to 19, **characterised in that**
the guides (10) of two adjacent assembly cells (21, 22) run parallel,
and buffer locations associated with both assembly cells (21, 22) simultaneously are provided between those guides (10).

22. A method for operating an assembly cell (1; 21, 22) configured according to any one of claims 1 to 19, **characterised in that**
alternative assembly procedures may be carried out at at least one assembly station,
and, depending on the pallet (33; 42, 43; 54; 68, 69) situated in the assembly station, one of the alternative assembly procedures is selected and carried out.

23. A method according to claim 22, **characterised in that** in the work sequence of a subassembly (55) of a pallet (33; 42, 43; 54; 68, 69) the same pallet (33; 42, 43; 54; 68, 69) is transported to the same assembly station several times and the subassembly (55) of the pallet (33; 42, 43; 54; 68, 69) then undergoes different assembly procedures at that assembly station each time.

24. A method according to claim 22 or claim 23, **characterised in that** various types of pallet (33; 42, 43; 54; 68, 69) each with different subassemblies (55) are processed in the assembly cell (1; 21, 22) simultaneously.

25. A method for operating an assembly cell (1; 21, 22) according to claim 24,
**characterised in that**
the assembly cell (1; 21, 22) has N manual assembly stations (30), where N is equal to or greater than 2,
in the assembly cell (1; 21, 22) at least M types of pallet (33; 42, 43; 54; 68, 69) each with different subassemblies (55) are processed,
M is equal to or greater than N,
and for each manual assembly station (30) at least one type of pallet (33; 42, 43; 54; 68, 69) is provided, in the work sequence of which that manual assembly station (30) is next in turn before any other manual assembly station (30).

## Revendications

1. Cellule de montage (1 ; 21, 22) se prêtant au montage, sur des palettes (33 ; 42, 43 ; 54 ; 68, 69), de groupes structurels (55) constitués de pièces (35),
comprenant plusieurs zones de palettisation (3a, 3b, 3c, 3d, 3e, 3f ; 3g ; 3h) sur lesquelles des palettes (33 ; 42, 43 ; 54 ; 68, 69) peuvent se trouver, au moins une partie desdites zones de palettisation (3a-3h) étant conçues comme des postes de montage en vue de l'exécution d'opérations de montage sur les groupes structurels (55) des palettes (33 ; 42, 43 ; 54 ; 68, 69),
et comprenant au moins un dispositif de transport pour transporter les palettes (33 ; 42, 43 ; 54 ; 68, 69) entre les zones de palettisation (3a-3h), ledit dispositif de transport étant réalisé sous la forme d'un module triaxial (2 ; 23, 24),
qui peut transporter directement une palette individuelle (33 ; 42, 43 ; 54 ; 68, 69) à partir de chaque zone de palettisation (3a-3h), à l'intérieur de la cellule de montage (1 ; 21, 22), vers chaque autre zone libre de palettisation (3a-3h) à l'intérieur de ladite cellule de montage (1 ; 21, 22),
**caractérisée par le fait**
**que** ladite cellule de montage (1 ; 21, 22) présente au moins un poste jumelé (4, 5 ; 25 ; 40) de montage manuel, chaque poste jumelé (4, 5 ; 25 ; 40) de montage manuel englobant deux postes (30) de montage manuel auxquels un opérateur (11) peut effectuer alternativement des opérations de montage.

2. Cellule de montage (1 ; 21, 22) selon la revendication 1, **caractérisée par le fait que** le poste jumelé (4, 5 ; 25 ; 40) de montage manuel est réalisé de façon telle que, lors d'un traitement s'opérant à l'un des postes (30) de montage manuel dudit poste jumelé (4, 5 ; 25 ; 40) de montage manuel, une palette (33 ; 42, 43 ; 54 ; 68, 69) déjà traitée soit remplacée, à l'autre poste (30) de montage manuel, par une palette (33 ; 42, 43 ; 54 ; 68, 69) devant encore être traitée.

3. Cellule de montage (1 ; 21, 22) selon l'une des revendications précédentes,
**caractérisée par le fait que** les deux postes (30) de montage manuel du poste jumelé (4, 5 ; 25 ; 40) de montage manuel comportent des zones de palettisation (3a, 3b) agencées en juxtaposition, de telle sorte qu'un opérateur puisse passer immédiatement, en alternance, de l'un des postes (30) de montage manuel du poste jumelé (4, 5 ; 25 ; 40) de montage manuel à l'autre poste (30) de montage manuel dudit poste jumelé (4, 5 ; 25 ; 40) de montage manuel.

4. Cellule de montage (1 ; 21, 22) selon l'une des revendications précédentes,
**caractérisée par le fait que** les deux postes (30) de montage manuel du poste jumelé (4, 5 ; 25 ; 40) de montage manuel offrent une cloison séparatrice commune interposée entre les deux zones de palettisation (3a, 3b) desdits postes (30) de montage manuel dudit poste jumelé (4, 5 ; 25 ; 40) de montage manuel.

5. Cellule de montage (1 ; 21, 22) selon l'une des revendications précédentes,
**caractérisée par le fait qu'**au moins une partie des zones de palettisation (3d ; 3g) sont réalisées comme des zones tampon (8, 9) dans lesquelles aucune sorte d'opération de montage ne peut être exécutée sur les groupes structurels (55).

6. Cellule de montage (1 ; 21, 22) selon la revendication 5, **caractérisée par le fait que** plusieurs zones tampon (8, 9) sont agencées en superposition verticale, sachant notamment qu'au moins trois zones tampon (8, 9) sont verticalement superposées.

7. Cellule de montage (1 ; 21, 22) selon l'une des revendications précédentes,
**caractérisée par le fait que** ladite cellule de montage (1 ; 21, 22) englobe au moins un poste (30) de montage manuel pour l'exécution d'opérations de montage par un opérateur (11), ledit poste (30) de montage manuel étant de réalisation réglable en hauteur.

8. Cellule de montage (1 ; 21, 22) selon l'une des revendications précédentes,
**caractérisée par le fait**
**que** ladite cellule de montage (1 ; 21, 22) présente au moins un poste (30) de montage manuel qui comporte un écran protecteur mobile (32), en particulier un volet roulant de sûreté (44, 45) pouvant être déplacé entre deux positions ;
**que**, dans la première position dudit écran protecteur (32), l'accès d'un opérateur (11) à la zone de palettisation (3a, 3b ; 3h) du poste (30) de montage manuel est intégralement interdit, mais l'accès d'un dispositif de transport, à ladite zone de palettisation (3a, 3b ; 3h) dudit poste (30) de montage manuel, est en revanche autorisé ;
et **que**, dans la seconde position dudit écran protecteur (32), l'accès d'un opérateur (11) à la zone de palettisation (3a, 3b ; 3h) du poste (30) de montage manuel est autorisé en vue de l'exécution d'opérations de montage, mais l'accès du dispositif de transport, à ladite zone de palettisation (3a, 3b ; 3h) dudit poste (30) de montage manuel, est en revanche intégralement interdit.

9. Cellule de montage (1 ; 21, 22) selon la revendication 8, **caractérisée par le fait que** l'écran protecteur (32), occupant la première position, obture la zone de palettisation (3a, 3b ; 3h) du poste (30) de montage manuel avec occultation de la lumière.

10. Cellule de montage (1 ; 21, 22) selon l'une des revendications précédentes,
**caractérisée par le fait que** ladite cellule de montage (1 ; 21, 22) présente au moins un poste de montage automatique qui comporte un dispositif de remplacement (63), en vue de la sélection automatique entre plusieurs outils de montage (64).

11. Cellule de montage (1 ; 21, 22) selon l'une des revendications précédentes,
**caractérisée par le fait**
**que** ladite cellule de montage (1 ; 21, 22) présente au moins un poste de montage automatique ;
et **que** ledit poste de montage automatique comporte un premier dispositif propre de déplacement pouvant déplacer une palette (33 ; 42, 43 ; 54 ; 68, 69) vis-à-vis d'un outil (13) dudit poste de montage automatique qui occupe une position fixe dans ladite cellule de montage (1 ; 21, 22), si bien que des emplacements différents, situés sur ladite palette (33 ; 42, 43 ; 54 ; 68, 69), sont accessibles audit outil (13).

12. Cellule de montage (1 ; 21, 22) selon l'une des revendications précédentes,
**caractérisée par le fait**
**que** ladite cellule de montage (1 ; 21, 22) présente au moins un poste de montage automatique ;
**que** ledit poste de montage automatique englobe au moins deux zones de palettisation et une zone de montage en vue de l'exécution d'opérations de montage sur une palette (33 ; 42, 43 ; 54 ; 68, 69), sachant notamment que ladite zone de montage représente une zone supplémentaire de palettisation accessible au dispositif de transport ;
et **que** ledit poste de montage automatique comporte un deuxième dispositif propre de déplacement à l'aide duquel une palette individuelle peut être déplacée entre la zone de montage et chaque zone de palettisation du dispositif de montage automatique, et inversement.

13. Cellule de montage (1 ; 21, 22) selon l'une des revendications précédentes,
**caractérisée par le fait**
**que** ladite cellule de montage (1 ; 21, 22) présente au moins un poste de montage automatique ;
**que** ledit poste de montage automatique comprend des première et seconde zones de palettisation (3e, 3f) disposées, l'une et l'autre, sur un chariot commun (14), ledit chariot (14) pouvant être déplacé entre deux positions au moyen d'un troisième dispositif de déplacement ;
**que**, dans la première position dudit chariot (14), la première zone de palettisation (3e) est accessible au dispositif de transport, et une palette (69) de la seconde zone de palettisation (3f) est accessible en vue d'opérations de montage par ledit poste de montage automatique ;
et **que**, dans la seconde position dudit chariot (14), la seconde zone de palettisation (3f) est accessible au dispositif de transport, et une palette (68) de la première zone de palettisation (3e) est accessible en vue d'opérations de montage par ledit poste de montage automatique.

14. Cellule de montage (1 ; 21, 22) selon l'une des revendications 10 à 13,
**caractérisée par le fait que** le poste de montage automatique est réalisé sous la forme d'un système d'assemblage (6).

15. Cellule de montage (1 ; 21, 22) selon l'une des revendications précédentes,
**caractérisée par le fait que** ladite cellule de montage (1 ; 21, 22) comporte une zone centrale (7) de stockage de pièces comprenant au moins une zone de palettisation (3c) et un distributeur (15) de pièces, ledit distributeur (15) de pièces étant réalisé de telle sorte qu'il puisse transporter des pièces (35), à partir de ladite zone centrale (7) de stockage de pièces, vers une palette (33 ; 42, 43 ; 54 ; 68, 69) située dans la zone de palettisation (3c) prévue au minimum dans ladite zone (7) de stockage de pièces.

16. Cellule de montage (1 ; 21, 22) selon l'une des revendications précédentes,
**caractérisée par le fait que** le dispositif de transport est muni d'un système rotatif conçu pour faire tourner une palette (33 ; 42, 43 ; 54 ; 68, 69) autour d'un axe vertical.

17. Cellule de montage (1 ; 21, 22) selon l'une des revendications précédentes,
**caractérisée par le fait**
**que** le dispositif de transport est mobile vers l'avant et vers l'arrière dans une direction des X, sur un guide horizontal (10) ;
et **que** les zones de palettisation (3a-3h) sont situées sur un côté dudit guide (10), ou de part et d'autre dudit guide (10).

18. Cellule de montage (1 ; 21, 22) selon la revendication 17, **caractérisée par le fait que** le dispositif de transport peut être déplacé le long du guide (10) à l'aide d'un moteur linéaire.

19. Cellule de montage (1 ; 21, 22) selon l'une des revendications 17 ou 18,
**caractérisée par**
la présence de plusieurs plates-formes de base (18a, 18b, 18c, 18d ; 18e) identiques, qui sont agencées en succession dans la direction des X et sont fixées les unes aux autres de manière libérable ;
et par le fait que lesdites plates-formes de base (18a-18e) comportent des logements normalisés, sachant qu'au moins une partie desdits logements offrent une fixation amovible, en particulier un assujettissement boulonné à des postes de montage et/ou à des zones tampon (8, 9) et/ou à des tronçons du guide (10) du dispositif de transport et/ou à des zones centrales (7) de stockage de pièces et/ou à d'autres systèmes de ladite cellule de montage (1 ; 21, 22) dotés de parties d'embase correspondantes.

20. Système de montage (20) incluant au moins deux cellules de montage (21, 22) selon l'une des revendications précédentes, **caractérisé par le fait que** lesdites cellules de montage (21, 22) présentent des zones respectives de palettisation (3g) réalisées sous la forme de zones tampon ;
et qu'au moins une partie desdites zones tampon de chaque cellule de montage (21, 22) sont simultanément associées à deux cellules de montage (21, 22), et sont par conséquent accessibles aux dispositifs de transport de ces deux cellules de montage (21, 22) (= zones de transfert).

21. Système de montage (20) selon la revendication 20, incluant au moins deux cellules de montage (21, 22) selon l'une des revendications 17 à 19, **caractérisé par le fait que** les guides (10) de deux cellules de montage (21, 22) voisines s'étendent parallèlement ;
et que des zones tampon, simultanément associées aux deux cellules de montage (21, 22), sont prévues entre ces guides (10).

22. Procédé d'actionnement d'une cellule de montage (1 ; 21, 22) réalisée conformément à l'une des revendications 1 à 19, **caractérisé par le fait**
**que** des opérations de montage peuvent se dérouler alternativement à au moins un poste de montage ;
et **que** l'une desdites opérations de montage alternatives est sélectionnée et exécutée en fonction de la palette (33 ; 42, 43 ; 54 ; 68, 69) située dans le poste de montage.

23. Procédé selon la revendication 22, **caractérisé par le fait que**, dans la succession du traitement d'un groupe structurel (55) d'une palette (33 ; 42, 43 ; 54 ; 68, 69), la même palette (33 ; 42, 43 ; 54 ; 68, 69) est transportée répétitivement vers le même poste de montage, et ledit groupe structurel (55) de ladite palette (33 ; 42, 43 ; 54 ; 68, 69) subit ensuite différentes opérations de montage respectives à ce poste de montage.

24. Procédé selon la revendication 22 ou 23, **caractérisé par le fait que** différents types de palettes (33 ; 42, 43 ; 54 ; 68, 69), affectés à des groupes structurels (55) respectivement différents, sont simultanément traités dans la cellule de montage (1 ; 21,22).

25. Procédé d'actionnement d'une cellule de montage (1 ; 21, 22), selon la revendication 24, **caractérisé par le fait**
**que** ladite cellule de montage (1 ; 21, 22) comprend N postes (30) de montage manuel, sachant que N est supérieur ou égal à 2 ;
**qu'**au moins M types de palettes (33 ; 42, 43 ; 54 ; 68, 69), affectés à des groupes structurels (55) respectivement différents, sont traités dans ladite cellule de montage (1 ; 21, 22) ;
**que** M est supérieur ou égal à N ;
et **que**, pour chaque poste (30) de montage manuel, il est prévu au moins un type de palette (33 ; 42, 43 ; 54 ; 68, 69) dans la succession du traitement duquel ce poste (30) de montage manuel devient opérant avant chaque autre poste (30) de montage manuel.
